# EUROPEAN PATENT SPECIFICATION

(11) **EP 3 680 496 B1**
(45) Date of publication and mention of the grant of the patent: **26.04.2023**
(21) Application number: 20151024.5
(22) Date of filing: 09.01.2020
(51) Int. Cl.: F16B 7/00, F16B 2/10, F16B 2/18, F16B 1/00, F16B 12/32, F16B 7/04, F21V 21/002, F21V 21/116, F21V 21/35, F21V 33/00, H01R 4/2404, H01R 25/14

(54) **REMOVABLE CONNECTING SYSTEM**
ENTFERNBARES ANSCHLUSSANLAGE
SYSTÈME DE CONNEXION AMOVIBLE

(30) Priority: 09.01.2019 IT 201900000295
(43) Date of publication of application: 15.07.2020
(73) Proprietor: Viabizzuno S.p.A., 40010 Bentivoglio (BO) (IT)
(72) Inventor: NANNI, Mario, 40125 Bologna (IT)
(74) Representative: Conti, Marco

(56) References cited:
- EP-A1- 2 842 461
- FR-A1- 2 721 377
- US-B1- 6 350 146

## Description

This invention relates to a removable connecting system.

In particular, the invention relates to a removable system for connecting a crosspiece to an upright.

By way of example and without limiting the scope of the invention, the connecting system according to the invention is advantageously used in the making of shelving or display units designed for display environments such as, for example, commercial premises or museums.

A particular use of the removable connecting system according to the invention is that in the making of electrified shelving or display units.

In particular, the expression means shelving or display units comprising a plurality of shelves, or supporting surfaces, and supports for the shelves which allow electrical devices to be powered, such as, for example, lighting systems, designed to illuminate products located on the shelves.

Patent document FR2721377 A1 describes a system for connecting profiled sections to make structures with rapid assembly and dismantling; this system does not comprise electrification of the structure.

The prior art linkage systems have not been found to be free from drawbacks.

Many of the prior art linkage systems leave the fixing means in view, thereby not being fully satisfactory in terms of appearance.

Moreover, in the majority of cases these prior art systems are based on the simple coupling of shelves which can sometimes disassemble simply through impact.

Further drawbacks of the prior art systems are connected to their assembly complexity, often requiring the use of special tools.

Moreover, sometimes, in order to hide from view the fixing means, the linkage systems are not very intuitive and are difficult to manoeuvre by the users.

The aim of the invention is to provide a removable connecting system which overcomes the above-mentioned drawbacks of the prior art.

A further aim of the invention is to provide a removable connecting system which allows a crosspiece and an upright of a display or shelving unit to be linked in a practical and effective manner.

Yet another aim of the invention is to provide a removable connecting system which is effective and practical and easy to use.

The invention provides a removable connecting (or linkage) system for connecting a crosspiece to an upright according to claim 1.

The crosspiece has an extension along a first direction (or transversal direction); the crosspiece has a first end. The upright has an extension in a second direction (or longitudinal direction). The upright is configured to be positioned transversely to the crosspiece at the first end.

The connecting system comprises a gripper element, connected to the first end of the crosspiece and designed to engage with the upright. The gripper element includes a pair of jaws, movable towards and away from each other between a first position in which they are mutually spaced apart, and a second position in which they are mutually close together, for engaging with a longitudinal groove defined in the upright, elongate along the first direction of the upright.

The crosspiece and the upright comprise respective electrical conductors, elongate in the first direction and in the second direction, respectively. The electrical conductors of the upright are located in the longitudinal groove formed in the upright. Similarly, the conductors of the crosspiece are located in a transversal groove formed in the crosspiece.

The connecting system comprises an electric slider, connected to the electrical conductors of the crosspiece, and located at the first end of the crosspiece. The electric slider is movable along the first direction between a first position (or retracted position), wherein it is retracted in the crosspiece, and a second position (or extracted or advanced position), wherein it is extracted from the crosspiece to penetrate in the longitudinal groove of the upright and come into contact with the electrical conductors of the upright. In particular, the electrical conductors of the upright are embedded in a rubber element which is perforated by the electric slider, to come into contact with the electrical conductors.

The connecting system comprises an actuating lever, pivoted on the crosspiece. The actuating lever is operatively connected to the gripper element for moving the gripper element for stably engaging the gripper element with the upright; in particular, the actuating lever is configured for moving the jaws towards and away from each other. Moreover, preferably, the actuating lever is configured for moving the slider between the retracted position and the advanced position. For this reason, preferably, the actuating lever is configured for moving the connecting system between a first operating configuration, wherein the gripper element is disengaged from the upright and the electric slider is electrically disconnected from the electrical conductors of the upright, and a second operating configuration, wherein the gripper element is stably engaged with the upright and the electric slider is electrically connected to the electrical conductors of the upright.

It should be noted that the actuating lever might be replaced by any movable mechanical element, operatively connected to the first slider to move it relative to the crosspiece. For example, the movable mechanical element could be a knob, or a crank, or a screw which can be screwed with a screwdriver.

The invention also provides a crosspiece comprising the connecting system, for connecting to an upright.

The invention also provides a lighting device comprising the connecting system, for connecting to a crosspiece or to an upright.

The invention also provides a connecting (or linkage) system (or structure, or reticular structure, or modular structure) comprising an upright, a crosspiece and a connecting system according to one or more of the aspects of the invention, for connecting the crosspiece to the upright. The connecting system (or structure) may also comprise a lighting device; the lighting device may also comprise a respective connecting system according to one or more of the aspects of the invention, for connecting to the upright or to the crosspiece.

The structure may form a shelving unit or a bookcase; in particular, the shelving unit comprises a plurality of crosspieces and a plurality of uprights; at least one crosspiece and at least one upright are interconnected by means of the connecting system; according to the invention the at least one upright is electrified and supports the at least one crosspiece, which is also electrified, thanks to the electrical linkage established by the connecting system. The shelving unit may also comprise at least one lighting device, mounted on the crosspiece (or on the upright) and powered electrically by the crosspiece (or by the upright).

The invention also provides a method for assembling a shelving unit (or structure) according to claim 12. The method comprises a step of preparing a crosspiece elongate in a first direction (or transversal direction) and an upright elongate in a second direction (or longitudinal direction). The method comprises a step of preparing a connectingsystem. The method comprises a step of connecting (or linking) the crosspiece to the upright. The linking step comprises the following sub-steps, in succession:
- advancing (or feeding) a gripper element, connected to an end of the crosspiece and comprising a pair of jaws facing each other, towards the upright, for penetrating inside a longitudinal groove defined in the upright; the longitudinal groove includes, in respective side walls (longitudinal) facing each other, a pair of longitudinal cavities;
- moving the jaws away from each other; preferably, the moving away is performed by means of a first slider which moves in a cam-shaped slot, due to an activation, by an operator, of an actuating lever;
- backward movement of the gripper element away from the upright, so that the pair of jaws engages with the pair of longitudinal cavities of the groove, defining a stable mechanical linkage between the crosspiece and the upright; preferably, the backward movement is performed by means of the first slider which moves in the cam-shaped slot.

Preferably, the connecting (or linking) step comprises a sub-step of feeding an electrical connection slider, connected to the end of the crosspiece, towards the upright, for penetrating inside the longitudinal groove and forming an electrical connection between the crosspiece and electrical conductors housed in the longitudinal groove of the upright. Preferably, the electric slider in the feeding perforates a rubber element which covers the electrical conductors.

The technical features of the invention, with reference to the above aims, are clearly described in the claims below and its advantages are more apparent from the detailed description which follows, with reference to the accompanying drawings which illustrate a preferred, non-limiting embodiment of the invention by way of example and in which:

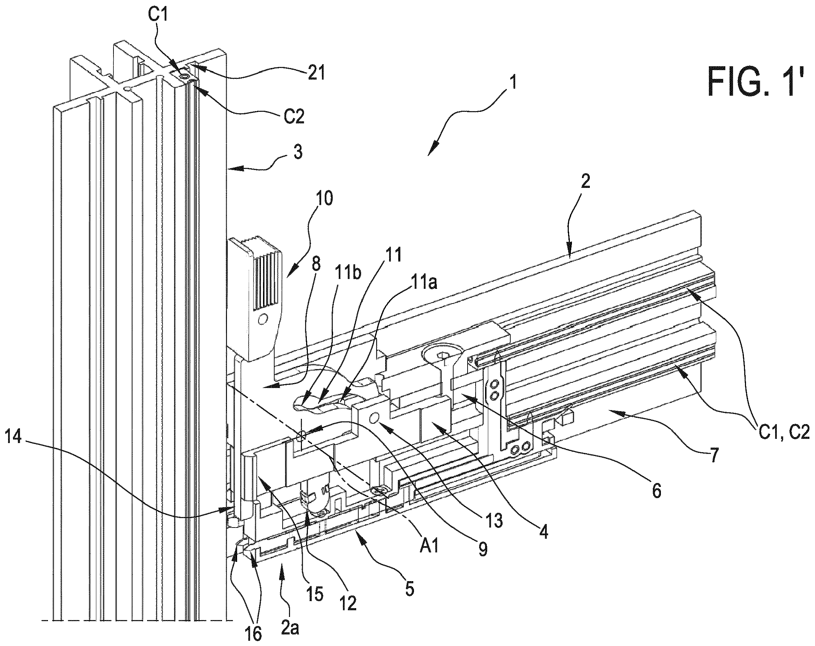

- Figure 1 is a side elevation cross-section view of a preferred embodiment of the removable connecting system made in accordance with the invention;
- Figure 1' is a perspective view, with some parts in cross-section in order to better illustrate others, of the connecting system of Figure 1;
- Figures 2 to 9 are respective perspective views of the connecting system of Figure 1' in a succession of operating steps;
- Figure 5 is a plan view from above of the connecting system of Figure 5;

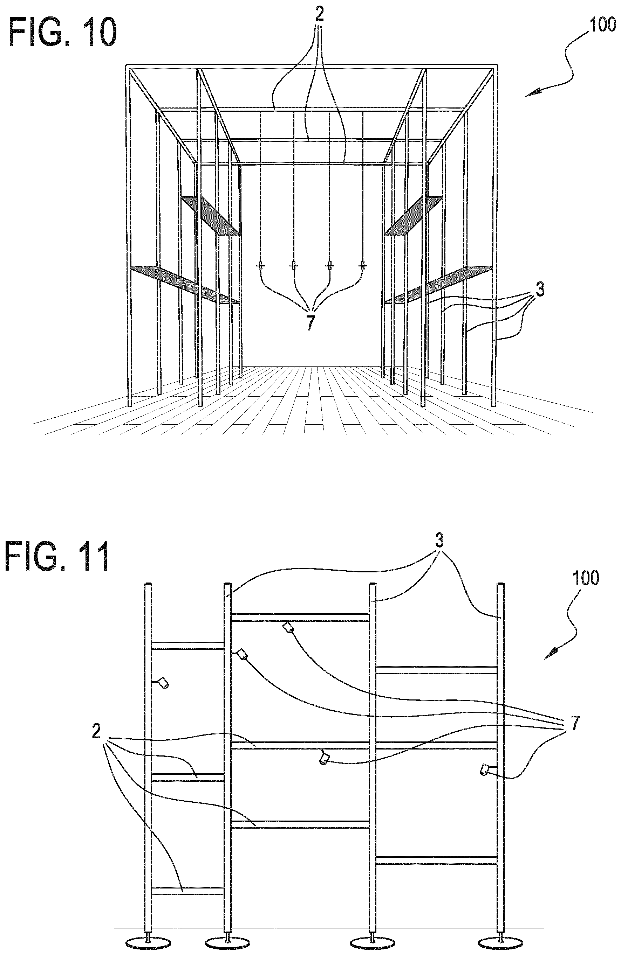

- Figures 10 and 11 illustrate examples of structures made using the connecting system of Figures 1 to 9.

As illustrated in Figure 1, the numeral 1 denotes in its entirety a removable system for linking a crosspiece 2 to an upright 3 made in accordance with the invention.

The connecting system 1 according to the invention is advantageously used in the making of shelving or display units designed for display environments such as, for example, commercial premises or museums.

In other words, the crosspiece 2 and the upright 3 are part of more complex structures, such as a display or a shelving unit 100.

In particular, the shelving unit (or structure) 100 comprises a plurality of crosspieces 2 and a plurality of uprights 3. Moreover, the shelving unit 100 comprises (at least) a connecting system 1, which interconnects a crosspiece 2 of the plurality and an upright 3 of the plurality. Preferably, each crosspiece 2 is mounted on a pair of uprights 3 by means of a respective pair of connecting systems 1, associated with respective opposite ends of the crosspiece 2. Thus, the shelving unit 100 forms a modular structure including the uprights 3 and the crosspieces 2, the modular structure may have a reticular shape. The crosspieces 2 are elongate in a first direction D1 and the uprights 3 are elongate in a second direction D2, different from the first direction. In particular, the second direction D2 is perpendicular to the first direction D1. Preferably, the second direction D2 is vertical.

The connecting system 1 defines a mechanical connection, so the crosspiece 2 is mechanically supported by the upright 3.

The crosspiece 2 and the upright 3 include respective electrical conductors C1, C2. The connecting system 1 also preferably defines an electrical connection, whereby the electrical conductors C1, C2 of the crosspiece 2 receive electrical power from the electrical conductors C1, C2 of the upright 3.

The shelving unit 100 also comprises at least one lighting device 7. The lighting device 7 may be mounted on the crosspiece 2 and powered electrically by the electrical conductors C1, C2 of the crosspiece 2. The lighting device 7 may be mounted on the upright 3 and powered electrically by the electrical conductors C1, C2 of the upright 3. The lighting device 7 may include, for example, a LED or OLED spotlight (or light bulb).

As illustrated in the accompanying drawings, the upright 3 is positioned vertically and the crosspiece 2 is positioned horizontally.

In alternative embodiments not illustrated, the uprights 3 may be positioned horizontally.

The crosspiece 2 and the upright 3 are made of metal material starting from respective profiles, advantageously made of aluminium or aluminium alloys.

In the connecting system 1 illustrated in the accompanying drawings, both the crosspiece 2 and the upright 3 comprise inside them respective electrical conductors C1, C2 designed to transmit electric current to be used, for example, to power lighting devices or the like.

The crosspiece 2 has a main rectilinear extension according to a respective first direction D1.

The upright 3 has a main rectilinear extension according to a respective second direction D2.

The system 1 comprises, housed in the crosspiece 2, at a relative longitudinal end 2a, a first slider 4 and a second slider 5.

The first slider 4 is slidably housed in a respective first guide 6, formed in the body of the crosspiece 2 and extending longitudinally along the first direction D1.

The second slider 5 is slidably housed in a respective second guide 7, also formed in the body of the crosspiece 2 and extending longitudinally parallel to the first guide 6 and to the first direction D1.

The system 1 comprises, housed in the crosspiece 2, at its above-mentioned longitudinal end 2a, a lever 8 for actuating the above-mentioned first slider 4 and second slider 5.

The actuating lever 8 is pivoted on the crosspiece 2 by means of a first pin 9, to oscillate about a respective pivot axis A1.

The actuating lever 8 has a gripping portion 10, a cam-shaped slot 11 and a projection 12 with a divergent shape.

The actuating lever 8 has a mainly flat extension.

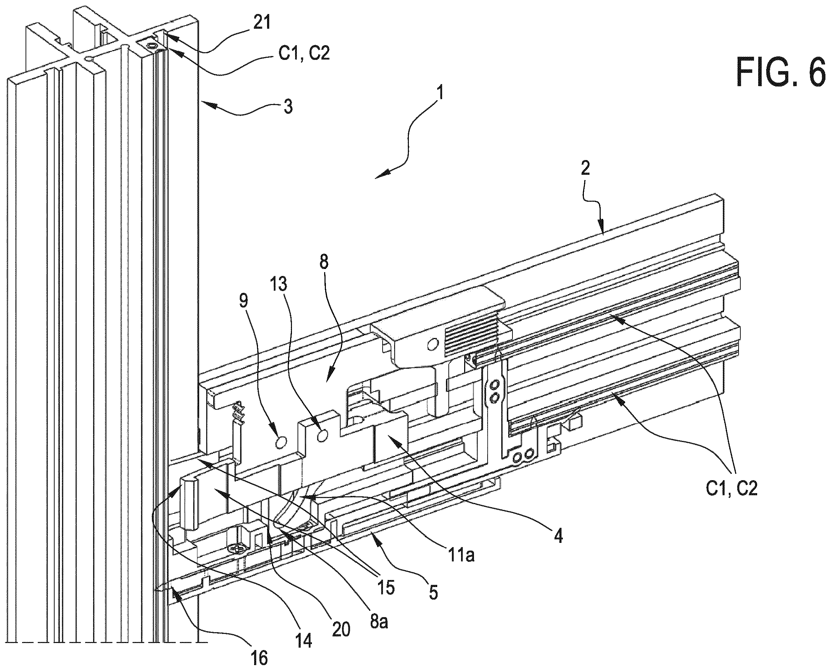

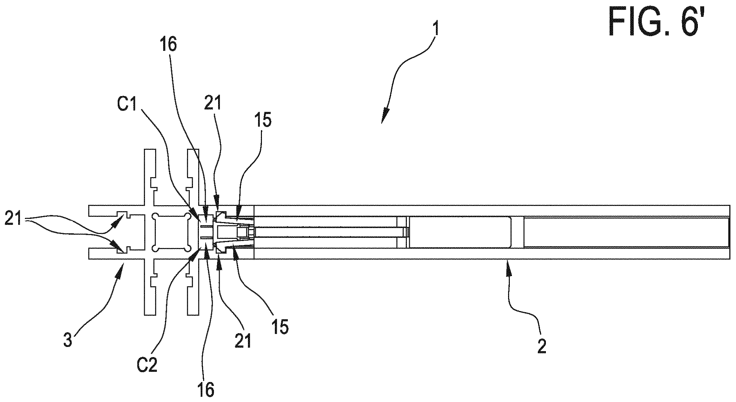

The actuating lever 8 is movable between a first disengaged end position, illustrated in Figure 1', at which the crosspiece 2 is not engaged with the upright 3, and a second linked end position, illustrated in Figure 6, at which the crosspiece 2 is stably linked to the upright 3.

It should be noted that, preferably, in the first disengaged position, the crosspiece 3 is mechanically and electrically disconnected from the upright 2 and, in the second linked position, the crosspiece 3 is mechanically and electrically linked by the upright 2. For this reason, the connecting system is movable between a first operating configuration, wherein the gripper element 14 is disengaged from the upright 3 and the second slider 5 is electrically disconnected from the electrical conductors C1, C2 of the upright 3, and a second operating configuration, wherein the gripper element 14 is stably engaged with the upright 3 and the second slider 5 is electrically linked to the electrical conductors C1, C2 of the upright 3. Preferably and as described in detail below, the upright 3 defines a groove elongate in the first direction D1 and the electric conductors C1, C2 associated with the upright 3 are housed in the groove. In the second operating configuration, the gripper element 14 is at least partly inserted in the groove to engage with opposite longitudinal walls of the groove; in particular, the groove defines, in respective opposite longitudinal walls, a pair of longitudinal cavities 21; in the second operating configuration, a pair of jaws 15 of the gripper element 14 engages with the pair of longitudinal cavities 21. Moreover, in the second operating configuration, the second slider 5 is at least partly inserted in the groove and comes into contact with the electric conductors C1, C2 housed in the groove of the upright 3, to establish an electrical connection.

Thus, the connecting system defines a connection both mechanical and electrical between the crosspiece 2 and the upright 3.

As clearly illustrated in Figure 1, the cam-shaped slot 11 has a first cam profile 11a and a second cam profile 11b, adjacent to each other and positioned one after another.

A second pin 13, integral with the first slider 4 is slidably engaged inside the above-mentioned cam-shaped slot 11.

The cam-shaped slot 11 and the second pin 13 together define a cam-follower coupling.

The cam-shaped slot with the relative first and second profiles 11a, 11b defines the cam of the above-mentioned cam-follower coupling whilst the second pin 13 defines the follower of the coupling.

The first slider 4 is configured for the mechanical coupling of the crosspiece 2 to the upright 3 and for this purpose comprises a gripper element 14 designed to engage by gripping with the upright 3.

The gripper element 14 comprises two jaws 15 facing each other.

The two jaws 15 are made integral with the body of the first slider 14 and are elastically deformable for modifying their distance from each other along a direction D3 transversal to the above-mentioned direction D1 of extension of the crosspiece 2.

The above-mentioned projection 12 with a divergent shape of the actuating lever 8 is designed to be interposed, in the form of a wedge, between the above-mentioned jaws 15 for determining their mutual moving away, as described in more detail below.

The above-mentioned projection 12 with a divergent shape defines, for the connecting system 1, respective means for controlling the gripper element 14.

The first slider 4 is therefore also defined as a mechanical coupling slider. The second slider 5 is configured for the electrical linkage, in the sense that its purpose is basically that of electrically linking the respective electric conductors C1, C2 present both in the crosspiece 2 and in the upright 3. Advantageously, at least the electrical conductors C1, C2 of the upright 3 are of the strand type, meaning that each wire is formed by a plurality of metal conductor wires which are more or less twisted to each other, coated with rubbery electrically insulating plastic material.

The second slider 5, in order to make the electrical linkage between the conductors C1, C2 of the crosspiece 2 and those of the upright 3 comprises two respective perforators 16, each designed, as described in more detail below, to penetrate through the above-mentioned layer of electrically insulating plastic material and through the above-mentioned strand wire, to engage in contact with its respective metal conductor wires. The second slider 5 is therefore also defined as the electric connecting slider.

In use, Figures 1 and 1' show a first end position of disengagement of the actuating lever 8.

This position is that which the actuating lever 8 adopts in preparation for a linkage of the crosspiece 2 to a relative upright 3.

This first position of the actuating lever 8 corresponds to respective withdrawn disengaged positions of both the first slider 4 and the second slider 5.

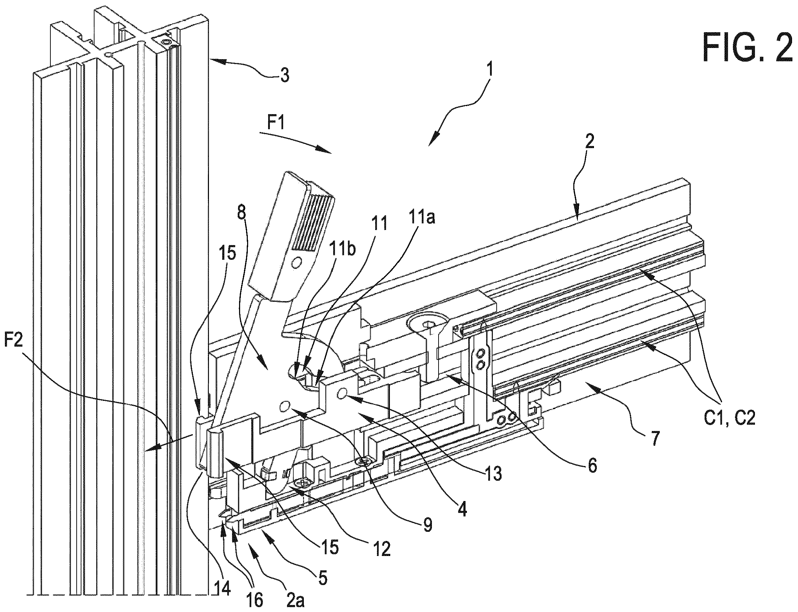

Starting from this first end position, a clockwise rotation of the actuating lever 8, in the direction indicated by the arrow F1 in Figure 2, causes the first slider 4 to advance simultaneously along its first sliding guide 6, in the direction indicated by the arrow F2. This forward movement is caused by the pushing action exerted by the first cam profile 11a of the slot 11 on the second pin 13 integral with the first slider 4 and defining the follower of the above-mentioned cam-follower coupling.

During the rotation of the actuating lever 8 about its pivot axis A1, a rotation which extends for approximately 30°, the projection 12 with a divergent shape of the lever 8 moves inside a special first cavity 17 made in the second slider 5, without intercepting any part of the second slider 5. The second slider 5 therefore remains stationary in a relative withdrawn position in which it does not protrude from the dimensions of the crosspiece 2.

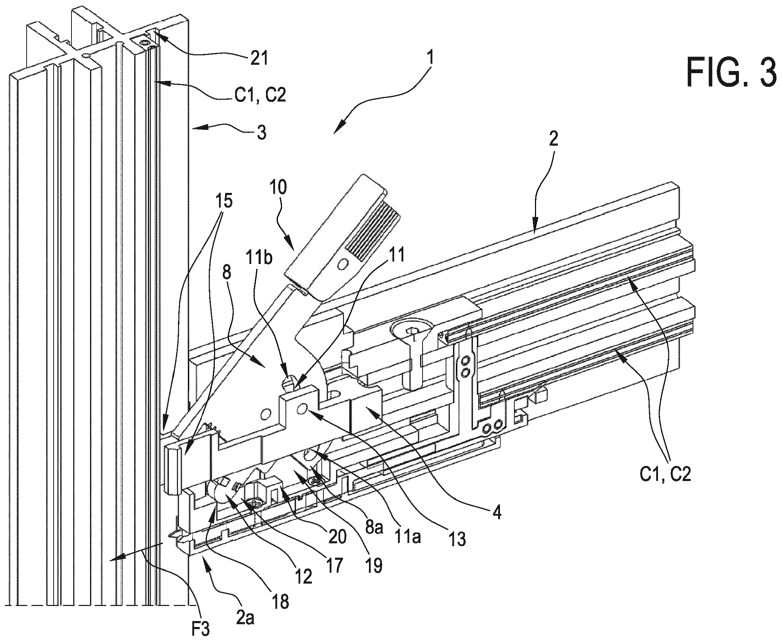

Continuing with the rotation of the actuating lever, reaching an angle of approximately 45°, as illustrated in Figure 3, the first slider 4 is most advanced away from the respective end 2a of the crosspiece 2, with the second pin 13 located at the end of the first cam profile 11a and close to engaging with the second cam profile 11b.

Again at this position of the actuating lever 8, the projection 12 with a divergent shape engages in contact with a first step 18 of the second slider 5, the first step 18 defining an end wall of the above-mentioned first cavity 17.

The engagement of the projection 12 with a divergent shape with the first step 18 results in a first forward movement of the second slider 5 away from the crosspiece 2, in the direction indicated by the arrow F3.

Whilst the first cam profile 11a has a radius of curvature which decreases considerably relative to the pivot axis A1 of the actuating lever 8, the second cam profile 11b has a slightly increasing radius of curvature. These variations of the radius of curvature of the two profiles 11a, 11b defining the slot 11 result in the fact that following a rotation of the actuating lever in the direction indicated by the arrow F1 of Figure 2, the second pin 13 engages with the radially outer face of the first profile 11a (thereby causing a pushing action of the first slider 4 away from the crosspiece 2) whilst it engages with the radially innermost face of the second profile 11b (thereby causing a corresponding pulling action on the first slider 4, tending to return it inside the crosspiece 2).

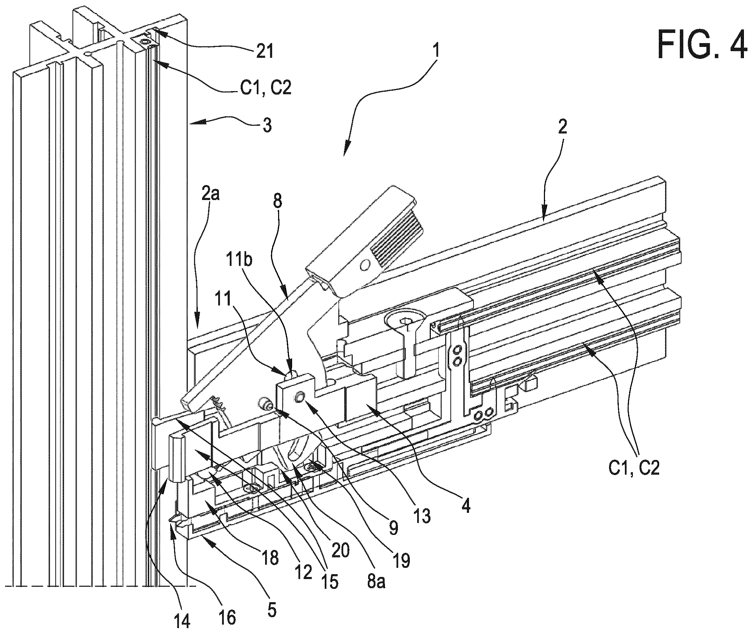

Continuing the rotation of the actuating lever 8, in the passage from the configuration of Figure 3 to that of Figure 4, the projection 12 with a divergent shape pushing on the first step 18 further moves the second slider 5 by a predetermined stretch away from the crosspiece 2.

At the same time, a first edge 8a of the actuating lever 8, outside the first cam profile 11a, faces inside a second cavity 19 made in the second slider 5.

A second step 20, made in the second slider 5, constitutes an end wall of the above-mentioned second cavity 19.

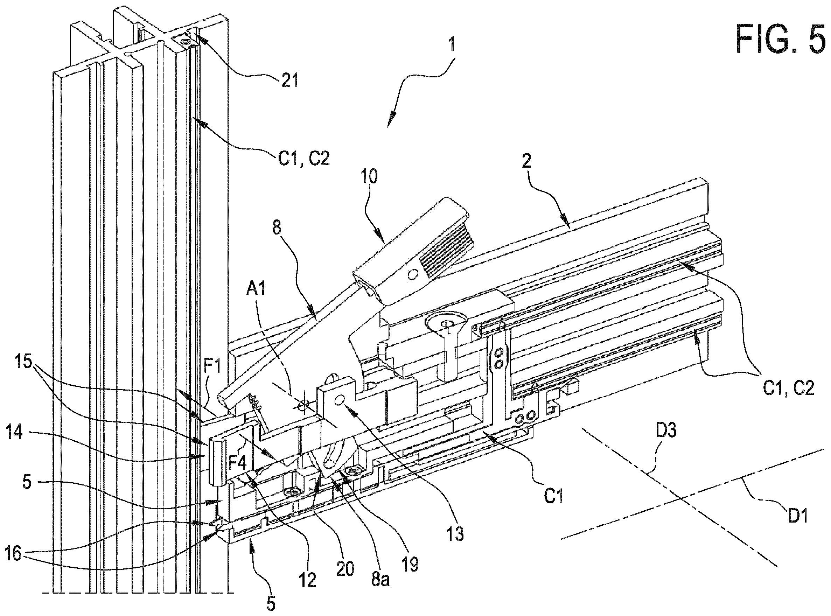

Continuing the rotation of the actuating lever 8 starting from the configuration of Figure 4 to that of Figure 5, the projection 12 with a divergent shape is tucked in between the two jaws 15 of the gripper element 14 determining their mutual moving away according to the above-mentioned direction D3 transversal to the direction of extension D1 of the crosspiece 2, in the direction of the arrows F4 shown in Figure 5.

Starting from the configuration illustrated in Figure 5, the above-mentioned first edge 8a of the actuating lever 8 engages in contact with the second step 20 of the second slider 5 and, continuing with the rotation of the actuating lever 8 until reaching its second end linkage position illustrated in Figure 6, moves forward the second slider 5 by a further predetermined stretch away from the crosspiece 2.

During this further predetermined stretch of forward movement, the electric perforators 16 present at the end of the second slider 5, after passing through the insulating coating made of plastic material, come into contact with respective electrical conductors C1, C2 present on the upright, so as to make an electrical linkage between the latter and the respective electrical conductors C1, C2 present on the crosspiece, as clearly illustrated also in Figure 6'.

As illustrated in Figure 6', which is a top plan view of the connecting system 1 shown in Figure 6, the jaws 15, when away from each other, have been positioned inside respective longitudinal cavities 21 made in the upright 3 and defining with their longitudinal walls, as many shape impediments to the escape of the jaws 15.

At the same time, again in the passage from the configuration of Figure 5 to that of Figure 6, the second pin 13, engaged in the second cam profile 11b of the slot 11, causes a withdrawal of the first slider 4 such as to generate a forced tightening of the gripper portions of the jaws 15 against the respective longitudinal walls of the cables 21 of the upright 3.

As mentioned, in Figure 6 the actuating lever 8 is illustrated in its second end position of linkage of the crosspiece 2 to the upright 3 and in its second end position it is completely incorporated inside the crosspiece 2, without protruding from the dimensions of the latter.

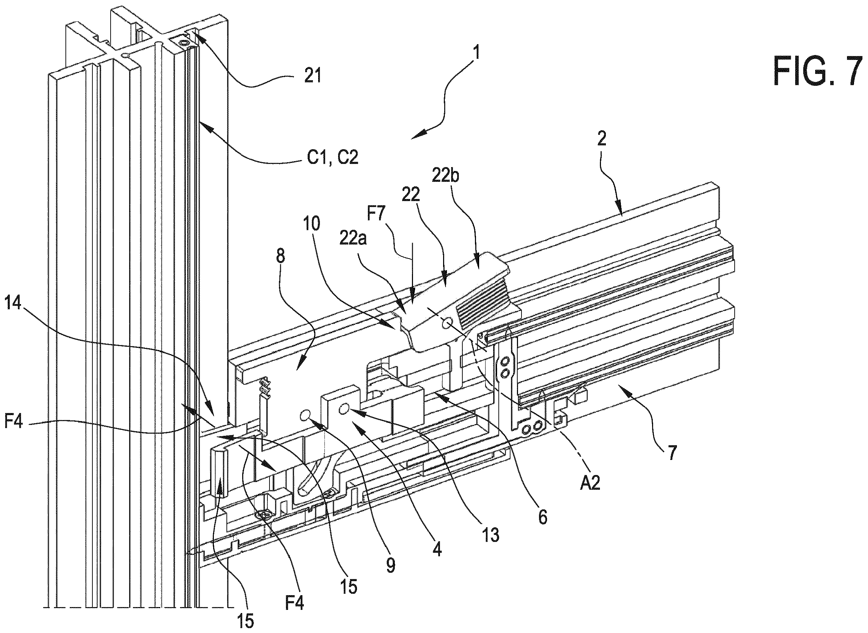

Figures 7 to 9 illustrate the disengagement of the crosspiece 2 from the upright 3.

In particular, as clearly illustrated in Figure 7, at the gripping portion 10 of the actuating lever 8, there is a rocker handgrip 22.

The rocker handgrip 22 is pivoted on the portion 10 to oscillate about a respective axis A2.

The rocker handgrip 22, subjected to a slight pressure in the direction of the arrow F7 at a relative front portion 22a, rises close to a relative rear portion 22b positioned on the opposite side with respect to the relative axis A2 of oscillation, thus providing a grip for gripping the actuating lever 8 by a user.

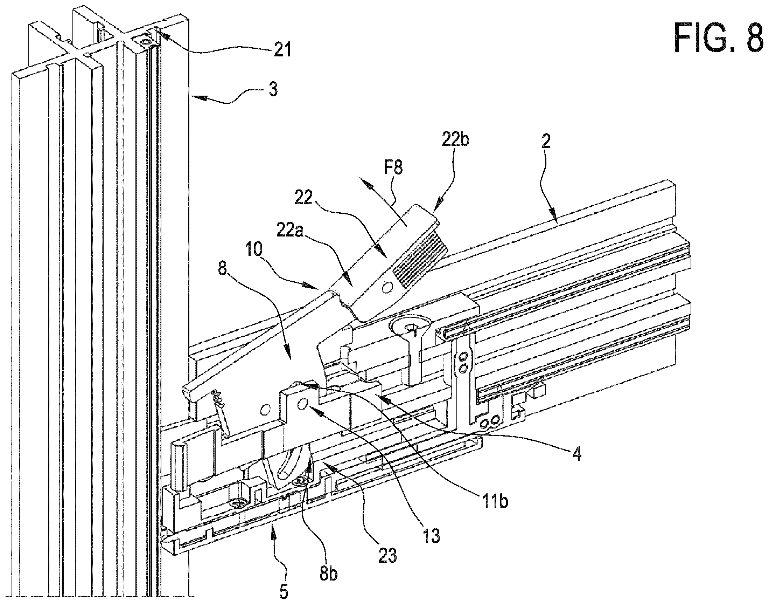

With reference to Figure 8, by the user exerting on the handgrip 22 a pulling action upwards in the direction of the arrow F8, the actuating lever 8 is moved about its pivot axis A1 which tends to move it away from its second end linkage position.

Starting from the configuration illustrated in Figure 8, a second edge 8b of the actuating lever 8 engages in contact with a third step 23 of the second slider 5 and, continuing in the rotation of the lever 8 in the anticlockwise direction indicated by the arrow F8, withdraws the second slider 5 in the direction of the crosspiece 2. During this first withdrawal of the second slider 5 there is the disengagement of the perforators 16 from the respective conductors C1, C2 of the upright 3.

This circumstance interrupts the electrical linkage between the conductors C1, C2 of the upright 3 and those of the crosspiece 2.

At the same time, the relative sliding between the second pin 13 and the second cam profile 11b determines a slight forward movement towards the upright 3 of the first slider 4, and therefore of the jaws 14, with the latter loosening the grip from the respective longitudinal cavities 21 causing the loss of the previous forced clamping.

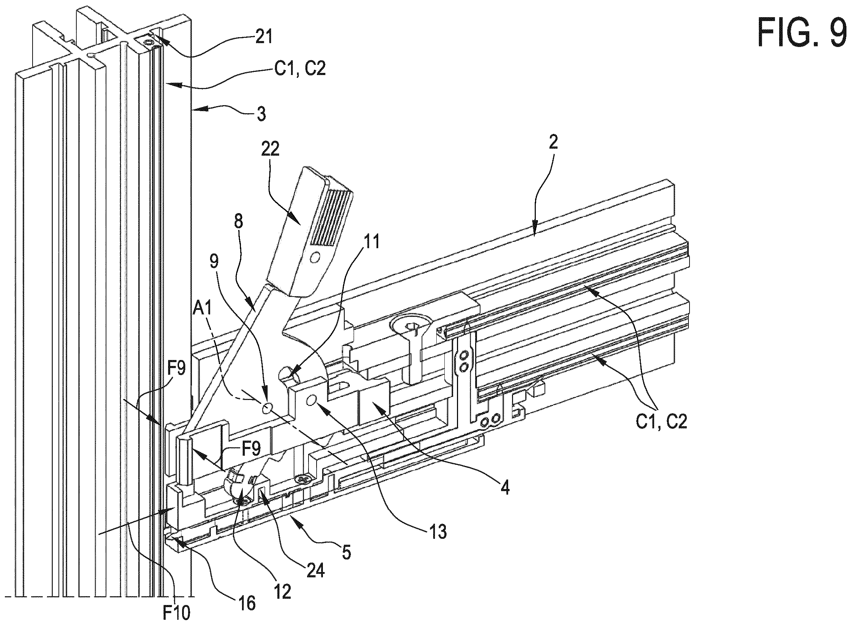

As illustrated in Figure 9, with the anticlockwise rotation of the actuating lever 8 in the direction indicated by the arrow F8 of Figure 8, the projection 12 with a divergent shape is disengaged from the jaws 15 of the gripper element 14.

The jaws 15, as they are no longer kept spaced by the force exerted by the divergent projection 12 tucked in between them, tend to move towards each other, thanks to their elasticity, in the direction of the arrows F9, thereby disengaging from the respective longitudinal cavities 21 of the upright 3 with which they were engaged.

This circumstance determines the mechanical release between the crosspiece 2 and the upright 3.

At the same time, again with reference to Figure 9, continuing the anticlockwise rotation of the actuating lever 8 about its own pivot axis A1, the projection 12 with a divergent shape engages in contact with a fourth step 24 of the second slider 5, thereby resulting in a further withdrawal of the second slider 5 in the direction of the inside of the crosspiece 2, in the direction of the arrow F10.

A further rotation of the actuating lever 8, until reaching its first disengagement end position, illustrated in Figure 1', causes, for engaging the second pin 13 with the first cam profile 11a, a withdrawal of the first slider 4 which therefore returns to its initial configuration, illustrated in Figures 1 and 1', wherein it is completely contained inside the crosspiece 2.

The invention as described above brings important advantages compared with the prior art.

In effect, the removable connecting system according to the invention makes it possible to completely hide the means for fixing the crosspiece to the upright, therefore being fully satisfactory in terms of appearance. Another advantage of the connecting system according to the invention is due to the extreme versatility of the linkage between crosspiece and upright, not constrained to predetermined separate positions.

A further advantage linked to the invention is due to the fact that the mechanical linkage between the upright and the crosspiece is completely stable and not exposed to the risks of detachment due to simple impacts.

In other words, the linkage between the upright and the crosspiece is separated only if desired, by actuating the respective lever.

A further advantage of the system according to the invention is due to the fact that it is able to actuate the mechanical and electrical connection simultaneously, with the same actuation of the respective lever, thereby making this operation particularly practical and simple.

Yet another advantage is due to the fact that no tools of any type are necessary for implementing the linkage by means of the system according to the invention, and all is performed manually.

## Claims

1. A removable connecting system (1) for connecting a crosspiece to an upright, the system comprising:
- a crosspiece (2) having a rectilinear longitudinal extension in a first predetermined direction (D1), the crosspiece (2) having a first longitudinal end (2a),
- an upright (3) configured to be positioned transversely to the crosspiece (2) at the first longitudinal end (2a),
- a first mechanical coupling slider (4), slidably coupled with the crosspiece (2) and supporting at least one gripper element (14) designed to engage with the upright (3),
- an actuating lever (8) pivoted on the crosspiece (2) and operatively connected to the first slider (4) for moving the latter relative to the crosspiece (2),
- means for controlling the gripper element (14) for stably engaging the gripper element (14) with the upright (3),
**characterized in that** the crosspiece (2) and the upright (3) comprise respective electrical conductors (C1, C2), wherein the connecting system (1) comprises a second slider (5) for electrical connection, slidably coupled with the crosspiece (2) and designed to be operated by the actuating lever (8) for moving relative to the crosspiece (2) and engaging with the upright (3) for defining an electrical connection between the electrical conductors (C1, C2) of the crosspiece (2) and the upright (3).

2. The connecting system (1) according to claim 1, wherein the gripper element (14) comprises two jaws (15) facing each other, wherein the means for controlling the gripper element (14) comprise a portion (12) of the actuating lever (8) configured to engage with the jaws (15) for modifying their distance from each other.

3. The connecting system (1) according to any one of the preceding claims, wherein the actuating lever (8) is operatively connected to the first slider (4) by means of a cam-follower coupling.

4. The connecting system (1) according to the preceding claim, wherein the actuating lever (8) comprises at least one cam-shaped slot (11) defining the cam of the cam-follower coupling.

5. The connecting system (1) according to the preceding claim, wherein the cam-shaped slot (11) has a first cam profile (11a) and a second cam profile (11b) adjacent to one another and consecutive with each other, designed to define two different laws of motion for the first slider (4).

6. The connecting system (1) according to the preceding claim, wherein the electrical conductors (C1, C2) at least of the upright (3) are of the strand type, comprising a plurality of metal conductor wires and coated with a layer of electrically insulating material, wherein the second slider (5) for electrical connection comprises respective perforators (16) designed to penetrate through the layer of electrically insulating material for engaging in contact with the metal conductor wires.

7. The connecting system (1) according to any one of the preceding claims, wherein the second slider (5) for electrical connection has a first step (18) designed to engage in contact with a portion (12) of the lever (8) to cause a forward movement of the second slider (5) along the first predetermined direction (D1).

8. The connecting system (1) according to any one of the preceding claims, wherein the connecting system (1) is movable between a first operating configuration, wherein the gripper element (14) is disengaged from the upright (3) and the second slider (5) is electrically disconnected from the electrical conductors (C1, C2) of the upright (3), and a second operating configuration, wherein the gripper element (14) is stably engaged with the upright (3) and the second slider (5) is electrically connected to the electrical conductors (C1, C2) of the upright (3).

9. The connecting system (1) according to claim 8, wherein the upright (3) defines a groove elongated in the first direction (D1), wherein the electrical conductors (C1, C2) are housed in the groove, and wherein, in the second operating configuration, the gripper element (14) is at least partly inserted in the groove to engage with opposite longitudinal walls of the groove and the second slider (5) is at least partly inserted in the groove to come into contact with the electrical conductors (C1, C2) housed in the groove.

10. A shelving unit (100) comprising a removable connecting system (1) according to any one of claims 1 to 9.

11. The shelving unit (100) according to claim 10, comprising:
- a plurality of crosspieces (2) elongate in a first direction (D1);
- a plurality of uprights (3) elongate in a second direction (D2) different from the first direction (D1),
wherein a crosspiece (2) of the plurality of crosspieces (2) is linked to an upright (3) of the plurality of uprights (3) , wherein the crosspiece (2) and the upright (3) include respective electrical conductors (C1, C2), and wherein the connecting system (1) defines both a mechanical connection, such that the crosspiece (2) is mechanically supported by the upright (3), and an electrical connection, such that the electrical conductors (C1, C2) of the crosspiece (2) receive electrical power from the electrical conductors (C1, C2) of the upright (3),
wherein the shelving unit (100) also comprises at least one lighting device (7) mounted on the crosspiece (2) and electrically powered by the electrical conductors (C1, C2) of the crosspiece (2).

12. A method for assembling a shelving unit (100), comprising the step of preparing a removable connecting system (1) according to any of claims 1 to 9.

13. The method according to claim 12, comprising a step of linking a crosspiece (2) elongate in a direction transversal to an upright (3) elongate in a longitudinal direction, by means of the connecting system (1), wherein the linkage step comprises the following sub-steps, in succession:
- feeding a gripper element (14), connected to an end of the crosspiece (2) and comprising a pair of jaws (15) facing each other, towards the upright (3), for penetrating inside a longitudinal groove defined in the upright (3), wherein the longitudinal groove includes, in respective side walls facing each other, a pair of longitudinal cavities (21);
- moving the jaws (15) away from each other;
- backward movement of the gripper element (14) away from the upright (3), so that the pair of jaws (15) engages with the pair of longitudinal cavities (21) of the groove, defining a stable mechanical linkage between the crosspiece (2) and the upright (3).

14. The method according to claim 13, wherein the linkage step comprises a sub-step of advancing an electrical connection slider (5), connected to the end of the crosspiece (2), towards the upright (3), for penetrating inside the longitudinal groove and forming an electrical connection between the crosspiece (2) and electrical conductors (C1, C2) housed in the longitudinal groove of the upright (3).

## Patentansprüche

1. Entfernbares Verbindungssystem (1) zum Verbinden eines Querträgers mit einem Ständer, wobei das System Folgendes umfasst:
- einen Querträger (2) mit einer geradlinigen Längserstreckung in einer ersten vorbestimmten Richtung (D1), wobei der Querträger (2) ein erstes Längsende (2a) aufweist,
- einen Ständer (3), der so ausgelegt ist, dass er am ersten Längsende (2a) quer zum Querträger (2) positioniert ist,
- einen ersten mechanischen Kopplungsschieber (4), der verschiebbar mit dem Querträger (2) gekoppelt ist und mindestens ein Greifelement (14) trägt, das zum Eingriff mit dem Ständer (3) ausgebildet ist,
- einen Betätigungshebel (8), der am Querträger (2) angelenkt ist und mit dem ersten Schieber (4) betriebswirksam verbunden ist, um diesen relativ zum Querträger (2) zu bewegen,
- Mittel zum Steuern des Greifelements (14), um das Greifelement (14) stabil mit dem Ständer (3) in Eingriff zu bringen,
**dadurch gekennzeichnet, dass** der Querträger (2) und der Ständer (3) jeweilige elektrische Leiter (C1, C2) umfassen, wobei das Verbindungssystem (1) einen zweiten Schieber (5) zum elektrischen Anschluß umfasst, der verschiebbar mit dem Querträger (2) gekoppelt ist und so ausgebildet ist, dass er durch den Betätigungshebel (8) bedient wird, um sich relativ zum Querträger (2) zu bewegen und mit dem Ständer (3) in Eingriff zu treten, um einen elektrischen Anschluß zwischen den elektrischen Leitern (C1, C2) des Querträgers (2) und dem Ständer (3) zu definieren.

2. Verbindungssystem (1) nach Anspruch 1, wobei das Greifelement (14) zwei Backen (15) umfasst, die einander zugewandt sind, wobei die Mittel zum Steuern des Greifelements (14) einen Abschnitt (12) des Betätigungshebels (8) umfassen, der ausgelegt ist, um mit den Backen (15) in Eingriff zu gelangen, um ihren Abstand voneinander zu verändern.

3. Verbindungssystem (1) nach einem der vorhergehenden Ansprüche, wobei der Betätigungshebel (8) mittels einer Kurvenrollekupplung mit dem ersten Schieber (4) betriebswirksam verbunden ist.

4. Verbindungssystem (1) nach dem vorhergehenden Anspruch, wobei der Betätigungshebel (8) mindestens einen nockenförmigen Schlitz (11) umfasst, der den Nocken der Kurvenrollekupplung definiert.

5. Verbindungssystem (1) nach dem vorhergehenden Anspruch, wobei der nockenförmige Schlitz (11) ein erstes Nockenprofil (11a) und ein zweites Nockenprofil (11b), die benachbart zueinander und aufeinander folgend liegen, aufweist, die so ausgebildet sind, dass sie zwei verschiedene Bewegungsgesetze für den ersten Schieber (4) definieren.

6. Verbindungssystem (1) nach dem vorhergehenden Anspruch, wobei die elektrischen Leiter (C1, C2) mindestens des Ständers (3) vom Litzentyp sind, umfassend eine Vielzahl von metallischen Leiterdrähten und beschichtet mit einer Schicht aus elektrisch isolierendem Material, wobei der zweite Schieber (5) für den elektrischen Anschluß jeweilige Perforatoren (16) umfasst, die ausgebildet sind, um durch die Schicht aus elektrisch isolierendem Material durchzudringen, um in Kontakt mit den metallischen Leiterdrähten einzugreifen.

7. Verbindungssystem (1) nach einem der vorhergehenden Ansprüche, wobei der zweite Schieber (5) für den elektrischen Anschluß eine erste Stufe (18) aufweist, die dazu ausgebildet ist, in Kontakt mit einem Abschnitt (12) des Hebels (8) einzugreifen, um eine Vorwärtsbewegung des zweiten Schiebers (5) entlang der ersten vorbestimmten Richtung (D1) zu bewirken.

8. Verbindungssystem (1) nach einem der vorhergehenden Ansprüche, wobei das Verbindungssystem (1) zwischen einer ersten Betriebskonfiguration, in der das Greifelement (14) von dem Ständer (3) gelöst ist und der zweite Schieber (5) elektrisch von den elektrischen Leitern (C1, C2) des Ständers (3) getrennt ist, und einer zweiten Betriebskonfiguration, in der das Greifelement (14) stabil mit dem Ständer (3) in Eingriff ist und der zweite Schieber (5) elektrisch mit den elektrischen Leitern (C1, C2) des Ständers (3) verbunden ist, beweglich ist.

9. Verbindungssystem (1) nach Anspruch 8, wobei der Ständer (3) eine Nut definiert, die sich in der ersten Richtung (D1) verlängert, wobei die elektrischen Leiter (C1, C2) in der Nut untergebracht sind, und wobei in der zweiten Betriebskonfiguration das Greifelement (14) wenigstens teilweise in die Nut eingesetzt ist, um mit gegenüberliegenden Längswänden der Nut in Eingriff zu kommen, und der zweite Schieber (5) wenigstens teilweise in die Nut eingesetzt ist, um mit den elektrischen Leitern (C1, C2), die in der Nut untergebracht sind, in Kontakt zu kommen.

10. Regaleinheit (100) umfassend ein entfernbares Verbindungssystem (1) nach einem der Ansprüche 1 bis 9.

11. Regaleinheit (100) nach Anspruch 10, umfassend:
- eine Vielzahl von Querträgern (2), die sich in einer ersten Richtung (D1) verlängern;
- eine Vielzahl von Ständern (3), die sich in einer zweiten Richtung (D2) verlängern, die sich von der ersten Richtung (D1) unterscheidet,
wobei ein Querträger (2) der Vielzahl von Querträgern (2) mit einem Ständer (3) der Vielzahl von Ständern (3) verknüpft ist, wobei der Querträger (2) und der Ständer (3) jeweilige elektrische Leiter (C1, C2) beinhalten, und wobei das Verbindungssystem (1) sowohl eine mechanische Verbindung, sodass der Querträger (2) mechanisch durch den Ständer (3) getragen wird, als auch einen elektrischen Anschluß definiert, sodass die elektrischen Leiter (C1, C2) des Querträgers (2) elektrische Energie von den elektrischen Leitern (C1, C2) des Ständers (3) empfangen,
wobei die Regaleinheit (100) auch mindestens eine Beleuchtungsvorrichtung (7) umfasst, die an dem Querträger (2) angebracht ist und durch die elektrischen Leiter (C1, C2) des Querträgers (2) elektrisch gespeist wird.

12. Verfahren zum Zusammenbauen einer Regaleinheit (100), umfassend den Schritt zum Vorbereiten eines entfernbaren Verbindungssystems (1) nach einem der Ansprüche 1 bis 9.

13. Verfahren nach Anspruch 12, umfassend einen Schritt zum Verknüpfen eines Querträgers (2), der sich in einer Richtung quer zu einem Ständer (3) verlängert, der sich in einer Längsrichtung verlängert, mittels des Verbindungssystems (1), wobei der Verknüpfungsschritt die folgenden Unterschritte nacheinander umfasst:
- Zuführen eines Greifelements (14), das mit einem Ende des Querträgers (2) verbunden ist und ein Paar von Backen (15) umfasst, die einander zugewandt sind, in Richtung des Ständers (3), um in eine Längsnut einzudringen, die in dem Ständer (3) definiert ist, wobei die Längsnut in jeweiligen Seitenwänden, die einander zugewandt sind, ein Paar von Längshohlräumen (21) beinhaltet;
- Bewegen der Backen (15) voneinander wegführend;
- Rückwärtsbewegung des Greifelements (14) vom Ständer (3) wegführend, so dass das Paar von Backen (15) mit dem Paar von Längshohlräumen (21) der Nut in Eingriff kommt, wodurch eine stabile mechanische Verknüpfung zwischen dem Querträger (2) und dem Ständer (3) definiert wird.

14. Verfahren nach Anspruch 13, wobei der Verknüpfungsschritt einen Unterschritt zum Vorschieben eines elektrischen Verbindungsschiebers (5), der mit dem Ende des Querträgers (2) verbunden ist, in Richtung des Ständers (3) umfasst, um in die Längsnut einzudringen und einen elektrischen Anschluß zwischen dem Querträger (2) und elektrischen Leitern (C1, C2) zu bilden, die in der Längsnut des Ständers (3) untergebracht sind.

## Revendications

1. Système de raccordement amovible (1) pour raccorder une traverse à un montant, le système comprenant :
- une traverse (2) ayant une extension longitudinale rectiligne dans une première direction prédéterminée (D1), la traverse (2) comportant une première extrémité longitudinale (2a),
- un montant (3) configuré pour être positionné transversalement à la traverse (2) en correspondance de la première extrémité longitudinale (2a),
- un premier coulisseau d'accouplement mécanique (4), accouplé de manière coulissante à la traverse (2) et supportant au moins un élément de préhension (14) conçu pour se mettre en prise avec le montant (3),
- un levier d'actionnement (8) monté pivotant sur la traverse (2) et raccordé de manière fonctionnelle au premier coulisseau (4) pour déplacer ce dernier par rapport à la traverse (2),
- des moyens de commande de l'élément de préhension (14) pour mettre en prise stablement l'élément de préhension (14) avec le montant (3),
**caractérisé en ce que** la traverse (2) et le montant (3) comprennent des conducteurs électriques (C1, C2) respectifs, dans lequel le système de raccordement (1) comprend un deuxième coulisseau (5) pour le raccordement électrique, accouplé de manière coulissante à la traverse (2) et conçu pour être actionné par le levier d'actionnement (8) pour se déplacer par rapport à la traverse (2) et se mettre en prise avec le montant (3) pour définir un raccordement électrique entre les conducteurs électriques (C1, C2) de la traverse (2) et du montant (3).

2. Système de raccordement (1) selon la revendication 1, dans lequel l'élément de préhension (14) comprend deux mâchoires (15) se faisant face, dans lequel les moyens de commande de l'élément de préhension (14) comprennent une partie (12) du levier d'actionnement (8) configurée pour se mettre en prise avec les mâchoires (15) afin de modifier leur distance l'une par rapport à l'autre.

3. Système de raccordement (1) selon l'une quelconque des revendications précédentes, dans lequel le levier d'actionnement (8) est relié de manière fonctionnelle au premier coulisseau (4) au moyen d'un accouplement à galet de came.

4. Système de raccordement (1) selon la revendication précédente, dans lequel le levier d'actionnement (8) comprend au moins une fente en forme de came (11) définissant la came de l'accouplement à galet de came.

5. Système de raccordement (1) selon la revendication précédente, dans lequel la fente en forme de came (11) comporte un premier profil de came (11a) et un deuxième profil de came (11b) adjacents l'un à l'autre et consécutifs l'un à l'autre, conçus pour définir deux lois de mouvement différentes pour le premier coulisseau (4) .

6. Système de raccordement (1) selon la revendication précédente, dans lequel les conducteurs électriques (C1, C2) au moins du montant (3) sont du type à toron, comprenant une pluralité de fils conducteurs métalliques et revêtus d'une couche de matériau électriquement isolant, dans lequel le deuxième coulisseau (5) pour le raccordement électrique comprend des perforations respectives (16) conçues pour pénétrer à travers la couche de matériau électriquement isolant pour entrer en contact avec les fils conducteurs métalliques.

7. Système de raccordement (1) selon l'une quelconque des revendications précédentes, dans lequel le deuxième coulisseau (5) pour le raccordement électrique comporte une première marche (18) conçue pour entrer en contact avec une partie (12) du levier (8) afin de provoquer un mouvement vers l'avant du deuxième coulisseau (5) le long de la première direction prédéterminée (D1).

8. Système de raccordement (1) selon l'une quelconque des revendications précédentes, dans lequel le système de raccordement (1) est mobile entre une première configuration de fonctionnement, dans laquelle l'élément de préhension (14) est désengagé du montant (3) et le deuxième coulisseau (5) est électriquement décroché des conducteurs électriques (C1, C2) du montant (3), et une deuxième configuration de fonctionnement, dans laquelle l'élément de préhension (14) est mis en prise stablement avec le montant (3) et le deuxième coulisseau (5) est électriquement raccordé aux conducteurs électriques (C1, C2) du montant (3).

9. Système de raccordement (1) selon la revendication 8, dans lequel le montant (3) définit une rainure allongée dans la première direction (D1), dans lequel les conducteurs électriques (C1, C2) sont logés dans la rainure, et dans lequel, dans la deuxième configuration de fonctionnement, l'élément de préhension (14) est au moins partiellement introduit dans la rainure pour se mettre en prise avec les parois longitudinales opposées de la rainure et le deuxième coulisseau (5) est au moins partiellement introduit dans la rainure pour entrer en contact avec les conducteurs électriques (C1, C2) logés dans la rainure.

10. Étagère (100) comprenant un système de raccordement amovible (1) selon l'une quelconque des revendications 1 à 9.

11. Étagère (100) selon la revendication 10, comprenant :
- une pluralité de traverses (2) allongées dans une première direction (D1) ;
- une pluralité de montants (3) allongés dans une deuxième direction (D2) différente de la première direction (D1),
dans laquelle une traverse (2) de la pluralité de traverses (2) est reliée à un montant (3) de la pluralité de montants (3), dans laquelle la traverse (2) et le montant (3) incluent des conducteurs électriques (C1, C2) respectifs, et dans laquelle le système de raccordement (1) définit à la fois un raccordement mécanique, dans lequel la traverse (2) est supportée mécaniquement par le montant (3), et un raccordement électrique dans lequel les conducteurs électriques (C1, C2) de la traverse (2) reçoivent l'énergie électrique des conducteurs électriques (C1, C2) du montant (3),
dans laquelle l'étagère (100) comprend également au moins un dispositif d'éclairage (7) monté sur la traverse (2) et alimenté électriquement par les conducteurs électriques (C1, C2) de la traverse (2).

12. Procédé d'assemblage d'une étagère (100), comprenant l'étape consistant à préparer un système de raccordement amovible (1) selon l'une quelconque des revendications 1 à 9.

13. Procédé selon la revendication 12, comprenant une étape de liaison d'une traverse (2) allongée dans une direction transversale à un montant (3) allongé dans une direction longitudinale, au moyen du système de raccordement (1), dans lequel l'étape de liaison comprend les sous-étapes suivantes, en succession :
- alimenter un élément de préhension (14), raccordé à une extrémité de la traverse (2) et comprenant une paire de mâchoires (15) se faisant face, en direction du montant (3), pour pénétrer à l'intérieur d'une rainure longitudinale définie dans le montant (3),
dans lequel la rainure longitudinale inclut, dans les parois latérales respectives se faisant face, une paire de cavités longitudinales (21) ;
- éloigner les mâchoires (15) l'une de l'autre ;
- déplacer vers l'arrière l'élément de préhension (14) en l'éloignant du montant (3), de sorte que la paire de mâchoires (15) se met en prise avec la paire de cavités longitudinales (21) de la rainure, définissant une liaison mécanique stable entre la traverse (2) et le montant (3).

14. Procédé selon la revendication 13, dans lequel l'étape de liaison comprend une sous-étape consistant à faire avancer un coulisseau de raccordement électrique (5), raccordé à l'extrémité de la traverse (2), vers le montant (3), pour pénétrer à l'intérieur de la rainure longitudinale et former un raccordement électrique entre la traverse (2) et les conducteurs électriques (C1, C2) logés dans la rainure longitudinale du montant (3).
